(19) Europäisches Patentamt
European Patent Office
Office européen des brevets

(11) **EP 2 574 880 A2**

(12) **EUROPEAN PATENT APPLICATION**

(43) Date of publication:
**03.04.2013 Bulletin 2013/14**

(51) Int Cl.:
**G01C 21/16** (2006.01) **G01C 25/00** (2006.01)

(21) Application number: **12185998.7**

(22) Date of filing: **26.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 CN 201110291594**
**17.09.2012 US 201213621450**

(71) Applicant: **Maishi Electronic (Shanghai) Ltd.**
**Zhang Jiang Hi-Tech Park**
**Shanghai**
**201203 (CN)**

(72) Inventors:
• **Zhang, Dachun**
**610041 Chengdu, Sichuan (CN)**
• **Jinghua, Zou**
**610041 CHENGDU, SICHUAN (CN)**

(74) Representative: **Lippert, Stachow & Partner**
**Patentanwälte**
**Postfach 30 02 08**
**51412 Bergisch Gladbach (DE)**

(54) **A method, apparatus and system with error correction for an inertial navigation system**

(57)    A method for correcting errors for an Inertial Navigation System is disclosed. The method includes the steps of determining a working state of the Inertial Navigation System based on a current positioning parameter of the moving object, a navigation map-based reference positioning parameter and a GPS-based reference positioning parameter, and replacing an initial parameter of the Inertial Navigation System with the GPS-based reference positioning parameter and resetting the Inertial Navigation System to an initial state if the Inertial Navigation System is determined to be in an abnormal working state.

FIG. 1

EP 2 574 880 A2

## Description

RELATED APPLICATION

This Application claims priority to Patent Application Number 201110291594.2, filed on September 30, 2011 with State Intellectual Property Office of the P.R. China (SIPO), which is hereby incorporated by reference.

BACKGROUND

An Inertial Navigation System or similar systems can also be called inertial guidance system or inertial reference platform and so on. Generally, the Inertial Navigation System includes a calculator and multiple motion sensors, such as, a gyroscope and an accelerometer, and is configured to continue calculating the position, orientation angle, velocity and other positioning information of a moving object. The motion sensor measures the motion information (e.g., linear velocity and angular velocity) of the moving object, accumulates the measured motion information on initial navigation information which is input from outside, and then obtains updated navigation information of the moving object by calculation.

However, the accuracy errors and measurement errors of the motion sensors are accumulated during the calculation. After a relatively long period of time, a great deviation between a calculated motion track and an actual motion track of the moving object is generated due to the accumulated errors. Thus, the recursive calculation function of the Inertial Navigation System is seriously affected.

In a traditional Inertial Navigation System, a map assistance function is introduced. The traditional Inertial Navigation System continuously corrects errors of the navigation positioning information based on a navigation map. Thus, the positioning accuracy and reliability of the navigation system are increased. Although the recursive calculation function of the Inertial Navigation System is increased due to the map assistance function, there is still a mismatch in the Inertial Navigation System due to map errors resulted from the failure to update the road-net information of the navigation map or the inaccurate mapping for the road-net information. If the above-mentioned errors cannot be recognized in time, the accuracy of the navigation is decreased greatly.

SUMMARY

A method for correcting errors for an Inertial Navigation System is disclosed. The Inertial Navigation System corrects a positioning parameter of a moving object by recursive calculation and using a navigation map and the GPS information as inputs to the recursive calculation. The method includes the steps of determining a working state of the Inertial Navigation System based on a current positioning parameter of the moving object, a navigation map-based reference positioning parameter and a GPS-based reference positioning parameter by a working state detection module, and replacing an initial parameter of the Inertial Navigation System with the GPS-based reference positioning parameter and resetting the Inertial Navigation System to an initial state for correcting errors caused by the failure to update the road-net information of the navigation map or caused by the inaccurate mapping for the road-net information in the Inertial Navigation System if the Inertial Navigation System is determined to be in an abnormal working state.

In another embodiment, an apparatus with error correction capability for an Inertial Navigation System is disclosed. The Inertial Navigation System corrects a positioning parameter of a moving object by recursive calculation and using a navigation map and the GPS information as inputs to the recursive calculation. The apparatus includes a working state detection module, that is configured to determine the working state of the Inertial Navigation System based on an current positioning parameter of the moving object, a navigation map-based reference positioning parameter and a GPS-based reference positioning parameter; a state reset module, that is configured to replace an initial parameter of the Inertial Navigation System with the GPS-based reference positioning parameter and reset the Inertial Navigation System to an initial state for correcting errors caused by the failure to update the road-net information of the navigation map or caused by the inaccurate mapping for the road-net information in the Inertial Navigation System if the Inertial Navigation System is in an abnormal working state.

In yet another embodiment, a system for correcting errors caused by a failure to update road-net information of a navigation map or caused by inaccurate mapping for the road-net information is disclosed. The system includes an Inertial Navigation System, that is configured to correct an positioning parameter of a moving object by recursive calculation and using a navigation map and the GPS information as inputs to the recursive calculation; an apparatus with error correction, that is configured to determine a working state of the Inertial Navigation System based on a current positioning parameter of the moving object, a navigation map-based reference positioning parameter and a GPS-based reference positioning parameter, replace an initial parameter of the Inertial Navigation System with the GPS-based reference positioning parameter and reset the Inertial Navigation System to an initial state for correcting errors caused by the failure to update the road-net information of the navigation map or caused by the inaccurate mapping for the road-net information in the Inertial Navigation System if the Inertial Navigation System is in an abnormal working state.

BRIEF DESCRIPTION OF THE DRAWINGS

The embodiments will be more readily understood in view of the following description when accompanied by the below figures and wherein like reference numerals represent like elements, wherein:

FIG. 1 is a flowchart illustrating a method for correcting errors for an Inertial Navigation System, in accordance with one embodiment of the present disclosure;

FIG. 2 is a flowchart illustrating another method for correcting errors for an Inertial Navigation System, in accordance with one embodiment of the present disclosure;

FIG. 3 is a block diagram illustrating an example of crossroads that may cause an abnormal working state in an Inertial Navigation System, in accordance with one embodiment of the present disclosure;

FIG. 4 is a block diagram illustrating an example of an abnormal working state of an Inertial Navigation System caused by the lead and lag errors, in accordance with one embodiment of the present disclosure;

FIG. 5 is a block diagram illustrating an example of correcting lead and lag errors, in accordance with one embodiment of the present disclosure;

FIG. 6 is a flowchart illustrating a method for correcting errors for an Inertial Navigation System, in accordance with one embodiment of the present disclosure;

FIG. 7 is a flowchart illustrating a method for correcting errors for an Inertial Navigation System, in accordance with one embodiment of the present disclosure;

FIG. 8 is a flowchart illustrating another example of a method for correcting errors for an Inertial Navigation System, in accordance with one embodiment of the present disclosure;

FIG. 9 is a flowchart illustrating another example of a method for correcting errors for the Inertial Navigation System, in accordance with one embodiment of the present disclosure;

FIG. 10 is a diagram illustrating an example of a tunnel error of the Inertial Navigation System, in accordance with one embodiment of the present disclosure;

FIG. 11 is a block diagram illustrating an example of an apparatus with error correction for an Inertial Navigation System, in accordance with one embodiment of the present disclosure;

FIG. 12 is a block diagram illustrating another example of an apparatus with error correction for an Inertial Navigation System, in accordance with one embodiment of the present disclosure;

FIG. 13 is a block diagram illustrating an example of a system with error correction for an Inertial Navigation System, in accordance with one embodiment of the present disclosure.

DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

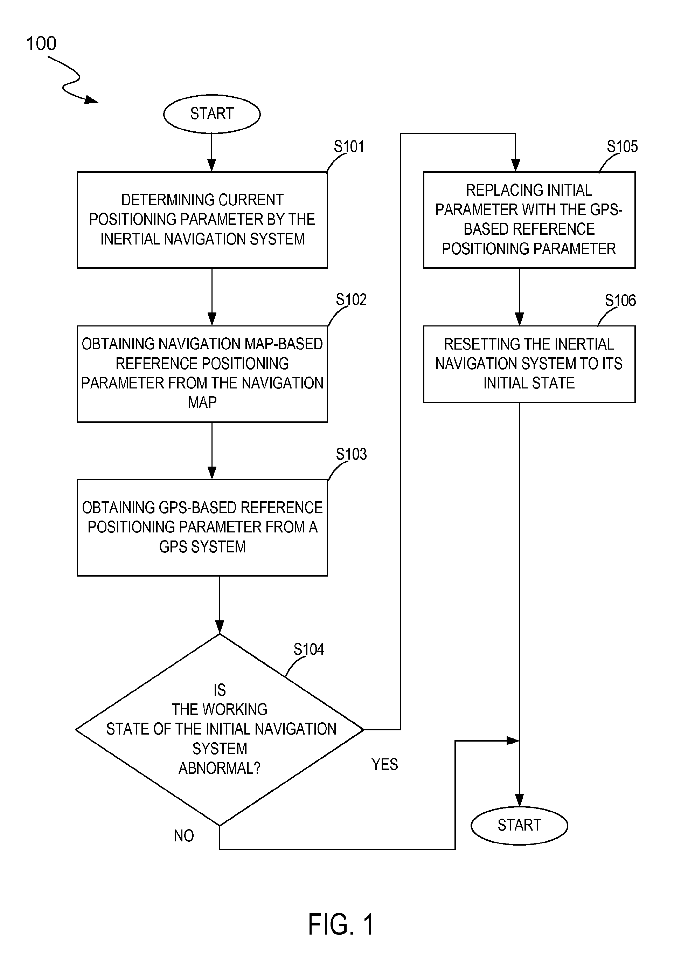

FIG.1 is a flowchart 100 illustrating an example of a method for correcting errors for an Inertial Navigation System, in accordance with one embodiment of the present disclosure. The Inertial Navigation System corrects the positioning parameter of a moving object (the Inertial Navigation System is integrated in the moving object) by recursive calculation and using a navigation map and the GPS information as inputs to the recursive calculation. The recursive calculation method for correcting errors includes the following steps which will be described in detail hereinafter.

The Inertial Navigation System determines current positioning parameter of a moving object, step S101, and obtains navigation map-based reference positioning parameter from the navigation map, step S102. The Inertial Navigation System obtains GPS-based reference positioning parameter from a GPS system, step S103. After obtaining current positioning parameter of the moving object, navigation map-based reference positioning parameter and GPS-based reference positioning parameter, a working state of the Inertial Navigation System is determined at step S104. In one embodiment, the current positioning parameter of the moving object is a positioning parameter of the moving object determined by the Inertial Navigation System. The navigation map-based reference positioning parameter is a reference positioning parameter of the moving object obtained from the navigation map. The GPS-based reference positioning parameter is a reference positioning parameter of the moving object obtained from a GPS system. Each of the current positioning parameter of the moving object, the navigation map-based reference positioning parameter and the GPS-based reference positioning parameter includes a location positioning parameter and/or an orientation positioning parameter. The working state includes a normal working state and an abnormal working state, wherein the abnormal working state represents a state that the moving object deviates away from the proper motion track.

After the Inertial Navigation System is determined in an abnormal working state, an initial parameter of the Inertial Navigation System is replaced with the GPS-based reference positioning parameter at step S105, and the state of the Inertial Navigation System is reset to an initial state at step S106.

In one embodiment, if the Inertial Navigation System is in the abnormal working state, the initial parameter is replaced with the GPS-based reference positioning parameter and the state of the Inertial Navigation System is reset to the initial state which is the state that the Inertial Navigation System uses the navigation map and the GPS information as inputs to the recursive calculation last time. After the initial parameter is replaced with the GPS-based reference positioning parameter and the Inertial Navigation System is reset to its initial state, map errors caused by the failure to update the road-net information of the navigation map or caused by the inaccurate mapping for the road-net information in the Inertial Navigation System are decreased, and the accuracy of the inertial navigation is greatly improved.

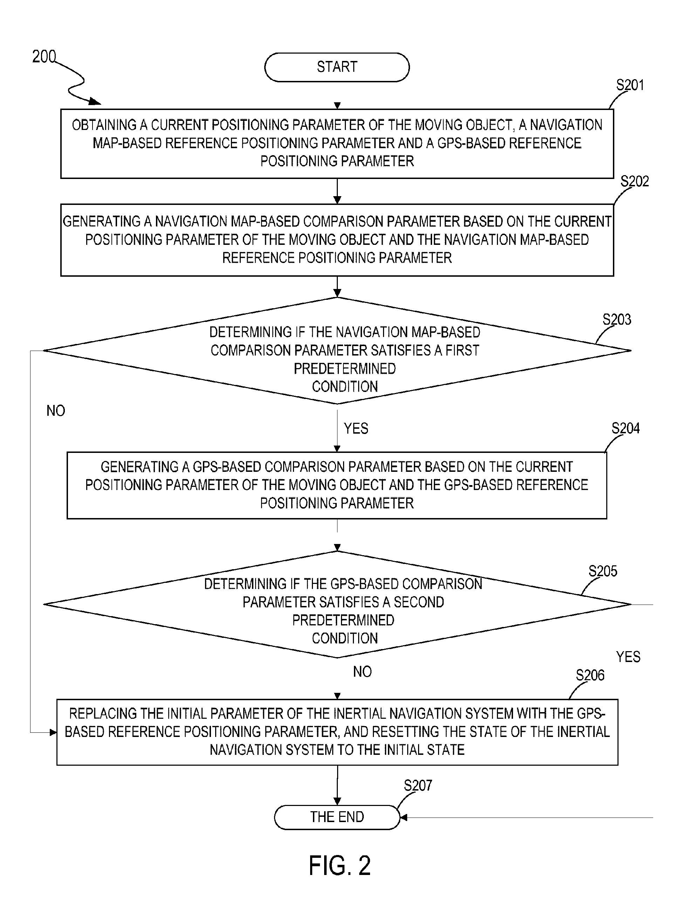

FIG.2 is a flowchart 200 illustrating another example of a method for correcting errors for the Inertial Navigation System, in accordance with one embodiment of the present disclosure. The Inertial Navigation System corrects the positioning parameter of a moving object by recursive calculation and using a navigation map and the GPS information as inputs to the recursive calculation. The following steps will be described in detail hereinafter.

S201, a current positioning parameter of the moving object, a navigation map-based reference positioning parameter and a GPS-based reference positioning parameter are obtained. In one embodiment, the current positioning parameter of the moving object is obtained from the Inertial Navigation System. The navigation map-based reference positioning parameter is a reference positioning parameter of the moving object provided by the navigation map. The GPS-based reference positioning parameter is a reference positioning parameter of the moving object obtained from a GPS system.

Furthermore, each of the current positioning parameter of the moving object, the navigation map-based reference positioning parameter and the GPS-based reference positioning parameter includes a location positioning parameter and/or an orientation positioning parameter.

After the current positioning parameter of the moving object, the navigation map-based reference positioning parameter and the GPS-based reference positioning parameter are obtained by the Inertial Navigation System, a navigation map-based comparison parameter is generated based on the current positioning parameter of the moving object and the navigation map-based reference positioning parameter, step S202. In one embodiment, the navigation map-based comparison parameter includes a distance difference parameter ΔD1 and an orientation difference parameter ΔH1. For example, each of the current positioning parameter of the moving object and the navigation map-based reference positioning parameter includes a distance parameter and an orientation parameter. The distance difference parameter ΔD1 is calculated based on the distance parameter in the current positioning parameter of the moving object and the distance parameter in the navigation map-based reference positioning parameter. And the orientation difference parameter ΔH1 is calculated based on the orientation parameter in the current positioning parameter of the moving object and the orientation parameter in the navigation map-based reference positioning parameter. Accordingly, the navigation map-based comparison parameter is obtained.

After generating the navigation map-based comparison parameter, the Inertial Navigation System determines if the navigation map-based comparison parameter satisfies a first predetermined condition for determining the working state of the Inertial Navigation System, step S203. If the first predetermined condition is satisfied which means the working state of the Inertial Navigation System is normal, then the Inertial Navigation System performs step S204; otherwise, the Inertial Navigation System performs step S206. For example, in the first predetermined condition, the value of the distance difference parameter ΔD1 in the navigation map-based comparison parameter is compared with a value of 30m, and the value of the orientation difference parameter ΔH1 is compared with a value 5°. If the distance difference parameter ΔD1 is less than 30m and the orientation difference parameter ΔH1 is less than 5°, then the first predetermined condition is satisfied. However, it should be understood that the values of 30m and 5° are the preferable values, however, the values are not so limited, and other values can also be selected.

Specifically, if the navigation map-based comparison parameter satisfies the first predetermined condition, which means the working state of the Inertial Navigation System is normal, the Inertial Navigation System proceeds to generate a GPS-based comparison parameter. If the navigation map-based comparison parameter does not satisfy the first predetermined condition, the Inertial Navigation System is determined to be in the abnormal working state, then the Inertial Navigation System performs step S206.

Step S204, a GPS-based comparison parameter is generated based on the current positioning parameter of the moving object and the GPS-based reference positioning parameter. In one embodiment, the GPS-based comparison parameter includes a distance difference parameter ΔD2 and an orientation difference parameter ΔH2. For example, each of the current positioning parameter of the moving object and the GPS-based reference positioning parameter includes a distance parameter and an orientation parameter. The distance difference parameter ΔD2 is calculated based on the distance parameter in the current positioning parameter of the moving object and the distance parameter in the GPS-based reference positioning parameter. And the orientation difference parameter ΔH2 is calculated based on the orientation parameter in the current positioning parameter of the moving object and the orientation parameter in the GPS-based reference positioning parameter. Accordingly, the GPS-based comparison parameter is obtained..

After generating the GPS-based comparison parameter and the GPS-based reference positioning parameter, the Inertial Navigation System uses these parameters to determine if the Inertial Navigation System is operating in a normal working state, and the determination is done by checking the GPS-based comparison parameters against a second predetermined condition, stepS205. If the second predetermined condition is satisfied, which means the working state of the Inertial Navigation System is normal, no action is taken; otherwise, the Inertial Navigation System replaces the initial parameter of the Inertial Navigation System with the GPS-based reference positioning parameter obtained from GPS system and resets the state of the Inertial Navigation System to the initial state, step S206. For example, in the second predetermined condition, the value of the distance difference parameter $\Delta D2$ in the GPS-based comparison parameter is compared with a value of 30m and the value of the orientation difference parameter $\Delta H2$ is compared with a value of 5°. If the distance difference parameter $\Delta D2$ is less than 30m and the orientation difference parameter $\Delta H2$ is less than 5°, then the second predetermined condition is satisfied. However, it should be understood that the values of 30m and 5° are the preferable values, however, the values are not so limited, and other values can also be selected.

Specifically, if the GPS-based comparison parameter satisfies the second predetermined condition, the Inertial Navigation System is determined to be in a normal working state. Otherwise, the Inertial Navigation System is determined to be in an abnormal working state. The Inertial navigation System is considered to be operating in a normal working state if the distance difference parameter $\Delta D2$ in the GPS-based comparison parameter is less than 30m and the orientation difference parameter $\Delta H2$ is less than 5°.

After it is determined that the Inertial Navigation System is in the abnormal working state, the initial parameter of the Inertial Navigation System is replaced by the GPS-based reference positioning parameter obtained from GPS system and the state of the Inertial Navigation System is reset to the initial state, which is the state that the Inertial Navigation System uses the navigation map and the GPS information as inputs to the recursive calculation last time, step S206.

For instance, after the working state of the Inertial Navigation System is determined to be abnormal, the initial parameter of the Inertial Navigation System can be replaced with the GPS-based reference positioning parameter obtained at stepS201. And the state of the Inertial Navigation System is reset to the initial state by itself. It should be understood that the normal working state can only be set by the Inertial Navigation System from the initial state. The Inertial Navigation System cannot repair the exception by itself if the Inertial Navigation System is in the abnormal working state.

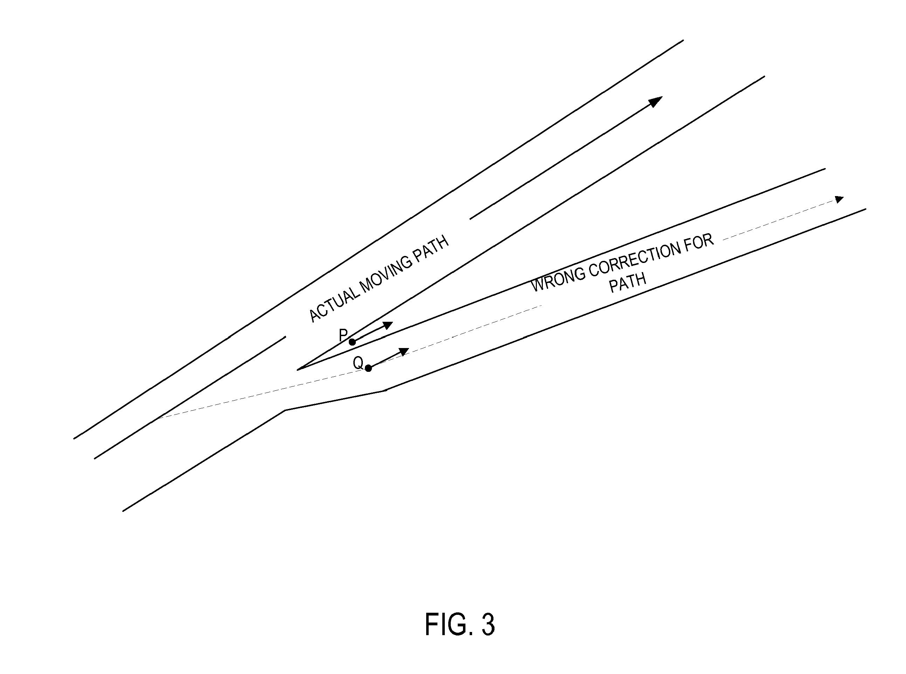

Furthermore, the multiple crossroads errors in the Inertial Navigation System can be corrected by the above-mentioned method. As described in FIG. 3, crossroads that may cause an abnormal working state in an Inertial Navigation System are shown. If the actual position of the moving object is at P, i.e. in the middle between the two roads, the position of the moving object could be misplaced at Q on a map by the Inertial Navigation System. Then the representation of this moving object on a map will be shown as moving on to the wrong way caused by the misplaced error and this error can hardly be detected. When a position of the representation of a moving object on a map is different from the position of the actual moving object, this indicates that the Inertial Navigation System is in the abnormal working state. This kind of error is called multiple crossroads error. The motion track of the moving object would continue to deviate away from the road if the error cannot be detected. The abnormal working state of the Inertial Navigation System caused by the multiple crossroads errors can be detected by performing actions described in steps S201 to S206 above-disclosed in the present disclosure. Therefore, the multiple crossroads errors can be reduced effectively, the wrong way mismatch can also be decreased, and the accuracy of the inertial navigation is improved greatly.

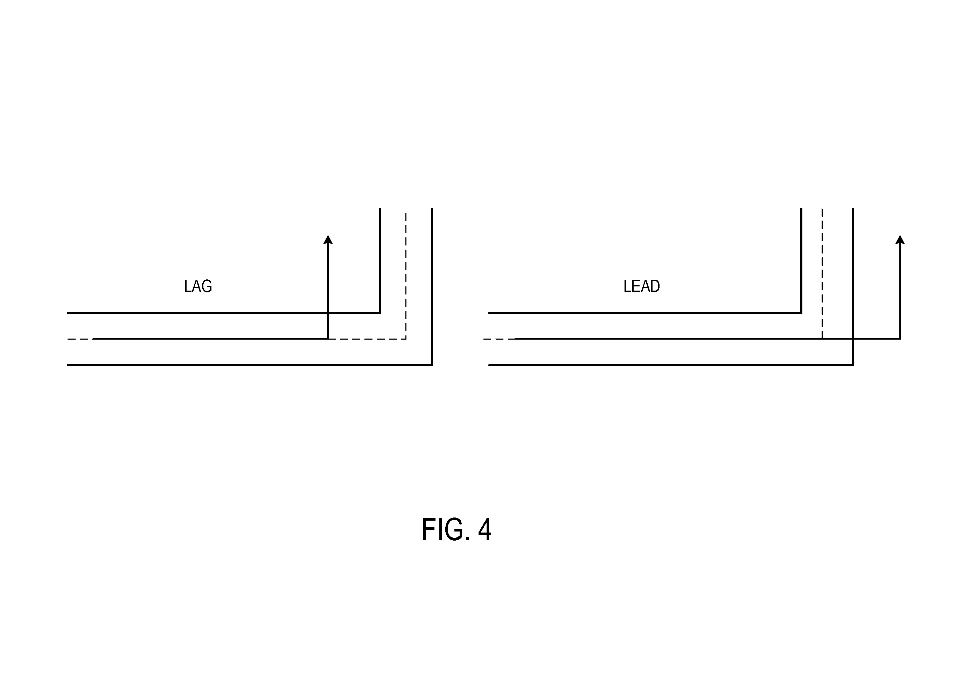

FIG. 4 illustrates an example of an abnormal working state of an Inertial Navigation System caused by the lead and lag errors, in accordance with one embodiment of the present disclosure. As shown in FIG.4, the lead and lag errors in the Inertial Navigation System can be corrected by the method above-mentioned. Lead and lag errors caused by errors of the algorithms, measurements of the motion sensors and the map assistance in the Inertial Navigation System. After the Inertial Navigation System executes recursive calculation for several times, although the motion orientation is consistent with the actual orientation of the road, the moving distance along the motion orientation caused by lead and lag errors is increased or decreased. If the lead and lag errors have not been corrected, the motion track of the moving object will continue to deviate away from the road when the moving object is at a crossroad. Because the motion track of the moving object deviates from the road when the moving object is at the crossroad, the Inertial Navigation System is deemed to be in the abnormal working state. The abnormal working state of the Inertial Navigation System caused by the lead and lag errors is detected by the method disclosed in the present disclosure. After detecting the lead and lag errors, the Inertial Navigation System can correct these errors based on method above-mentioned, accordingly the lead and lag errors can be reduced effectively.

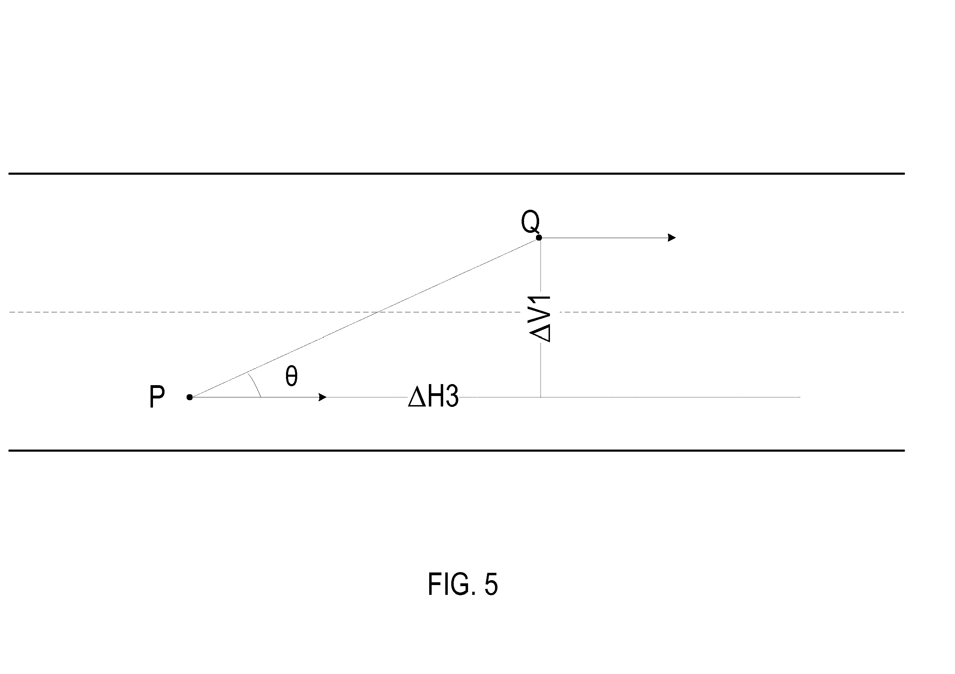

Preferably, the specific parameters mentioned in the above examples are used for correcting lead and lag errors, but it is not so limited. As described in FIG. 5, location P represents a current position of the moving object using the Inertial Navigation System. Location Q represents a position of the moving object provided by a GPS system. Then an orientation distance difference parameter ΔH3 (e.g., the lead distance or lag distance of the moving object) of the moving object between location P and location Q is obtained. The vertical distance difference parameter ΔV1 between location P and location Q is obtained. In one embodiment, the orientation distance difference parameter ΔH3 and the vertical distance difference parameter ΔV1 are used for correcting lead and lag errors. In order to obtain a better performance, the value of the orientation distance difference should be maintained in a range, such as 10m-30m. Preferably, in order to avoid deviating away from the road by GPS positioning, the lead and lag errors should be corrected in a situation when the value of ΔV1 is relatively small. And the location P navigated by the Inertial Navigation System can be replaced with the GPS-based reference positioning parameter.

It should be understood that the parameters for correcting errors in the Inertial Navigation System are not limited to those disclosed in the above examples. For example, the parameters that are used for determining the working state of the Inertial Navigation System can also be used. For example, the distance difference parameter ΔD1 and the orientation difference parameter ΔH1 in the navigation map-based comparison parameter, and the distance difference parameter ΔD2 and the orientation difference parameter ΔH2 in the GPS-based comparison parameter can be used to correct errors in the Inertial Navigation System.

In one embodiment, a first determination of the working state of the Inertial Navigation System is performed based on the current positioning parameter of the moving object, the navigation map-based reference positioning parameter, and a first predetermined condition. And a second determination of the working state of the Inertial Navigation System is performed based on the current positioning parameter of the moving object, the GPS-based reference positioning parameter, and a second predetermined condition. If the Inertial Navigation System is in an abnormal working state, the initial parameter of the Inertial Navigation System is replaced with the GPS-based reference positioning parameter and the state of the Inertial Navigation System is reset to an initial state. After the initial parameter is replaces with the GPS-based reference positioning parameter and the Inertial Navigation System is reset to its initial state, map errors caused by the failure to update the road-net information of the navigation map or caused by the inaccurate mapping for the road-net information in the Inertial Navigation System are decreased.

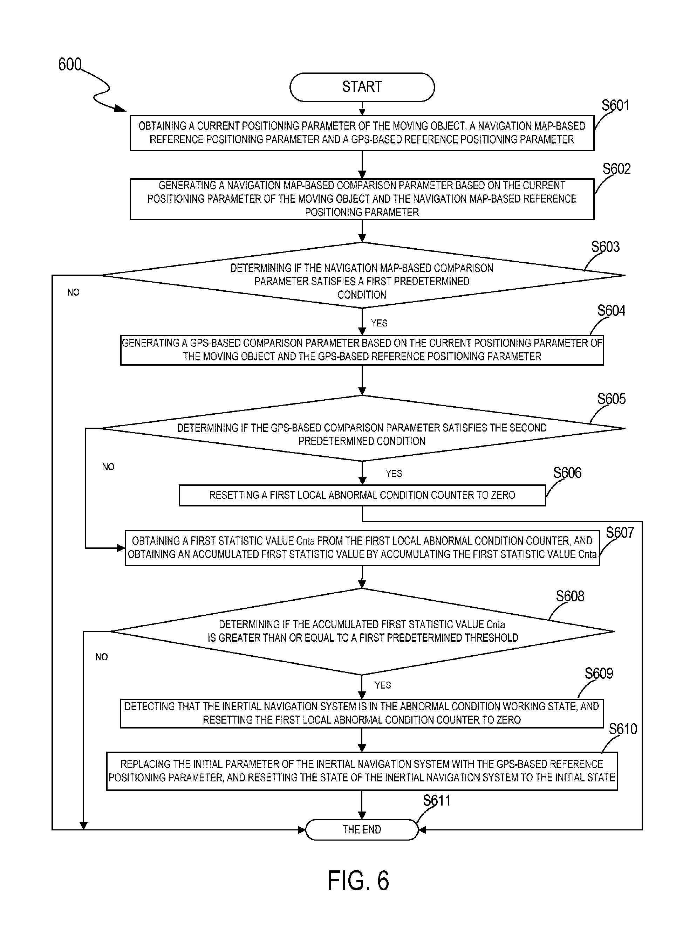

FIG. 6 is a flowchart 600 illustrating a method for correcting errors for an Inertial Navigation System, in accordance with one embodiment of the present disclosure. The method disclosed in this example includes the steps of S601-S612, wherein the steps of S601-S604 perform similar functions as the steps of S201-S204 disclosed in the example above-mentioned. The step of S610 performs the same function as the step of S206. The detailed descriptions about the steps S601-S611 will be explained below.

Step S601, a current positioning parameter of the moving object, a navigation map-based reference positioning parameter and a GPS-based reference positioning parameter are obtained.

Step S602, a navigation map-based comparison parameter is generated based on the current positioning parameter of the moving object and the navigation map-based reference positioning parameter. In one embodiment, the navigation map-based comparison parameter includes a distance difference parameter and an orientation difference parameter.

After the navigation map-based comparison parameter is generated, the Inertial Navigation System determines if the navigation map-based comparison parameter satisfies a first predetermined condition for determining the working state of the Inertial Navigation System, step S603. For example, the value of the distance difference parameter in the navigation map-based comparison parameter is compared with a value of 30m, and the value of the orientation difference parameter is compared with a value 5°. If the distance difference parameter is less than 30m and the orientation difference parameter is less than 5°, then the first predetermined condition is satisfied; otherwise, the first predetermined condition is not satisfied. If the first predetermined condition is satisfied which means the working state of the Inertial Navigation System is normal, the Inertial Navigation System proceeds to generate a GPS-based comparison parameter, step S604; otherwise, no action is taken.

Step S604, the GPS-based comparison parameter is generated based on the current positioning parameter of the moving object and the GPS-based reference positioning parameter. In one embodiment, the GPS-based comparison parameter includes a distance difference and an orientation difference.

After generating the GPS-based comparison parameter, the Inertial Navigation System determines if the GPS-based comparison parameter satisfies the second predetermined condition. For example, the value of the distance difference parameter in the GPS-based comparison parameter is compared with a value of 30m and the value of the orientation difference parameter is compared with a value of 5°. If the distance difference parameter is less than 30m and the orientation difference parameter is less than 5°, then the second predetermined condition is satisfied; otherwise, the second predetermined condition is not satisfied. If the second predetermined condition is satisfied which means the working state of the Inertial Navigation System is normal, the Inertial Navigation System proceeds to reset a first local abnormal condition counter, stepS606; otherwise, performs step S607.

Step S606, the first local abnormal condition counter is reset to zero. After the first local abnormal condition counter is reset, no action is taken. In one embodiment, the first local abnormal condition counter is configured to calculate the number of occurrences of the abnormal working state of the Inertial Navigation System resulted by the failure of the GPS-based comparison parameter satisfies with the second predetermined condition.

In one embodiment, the statistic value from the first local abnormal condition counter is represented by Cnta. When the first local abnormal condition counter is reset to zero, the statistic value Cnta is equal to zero.

Step S607, a first statistic value Cnta from the first local abnormal condition counter is obtained, and the first statistic value Cnta is accumulated to obtain an accumulated first statistic value. In one embodiment, the accumulated first statistic value Cnta is obtained according to the following equation (1)

$$Cnta = Cnta + 1 \qquad (1)$$

For example, if the obtained first statistic value Cnta is 3, then the accumulated first statistic value Cnta is equal to 4.

After obtaining the first statistic value Cnta from the first local abnormal condition counter, the Inertial Navigation System determines if the accumulated first statistic value Cnta is greater than or equal to a first predetermined threshold. Next, it is determined if the Inertial Navigation System is operating in an abnormal state by checking the Cnta against a threshold, step S608. If the Cnta is greater than the threshold, then the Inertial Navigation System is in an abnormal state and the process to reset the first local abnormal condition counter to zero, step S609; otherwise, no action is taken.

For example, the first predetermined threshold can be equal to 3. If the accumulated first statistic value Cnta is equal to 4 which is greater than 3, the Inertial Navigation System determines the working state of the Inertial Navigation System is abnormal and proceeds to reset the first local abnormal condition counter, step S609. However, if the accumulated first statistic value Cnta is equal to 2, which is less than the first predetermined threshold, no action is taken.

Step S609, the first local abnormal condition counter is reset to zero because the Inertial Navigation System is in the abnormal working state.

For example, as described in step S608, if the accumulated first statistic value Cnta is 4 and the first predetermined threshold is equal to 3, the Inertial Navigation System is detected to be in the abnormal condition working state. Then the first local abnormal condition counter is reset to zero, e.g., Cnta is equal to zero.

After it is determined that the Inertial Navigation System is in the abnormal working state, the initial parameter of the Inertial Navigation System is replaced by the GPS-based reference positioning parameter obtained from GPS system and the state of the Inertial Navigation System is reset to the initial state, which is the state that the Inertial Navigation System uses the navigation map and the GPS information as inputs to the recursive calculation last time, step S610. After the initial parameter is replaced with the GPS-based reference positioning parameter and the Inertial Navigation System is reset to its initial state, map errors caused by the failure to update the road-net information of the navigation map or caused by the inaccurate mapping for the road-net information in the Inertial Navigation System are decreased.

In the embodiment described in FIG. 6, the number of occurrences of the GPS-based comparison parameter's failure to satisfy the second predetermined condition is counted. If the GPS-based comparison parameter does not satisfy the second predetermined condition for multiple times, the Inertial Navigation System is determined to be in the abnormal working state.

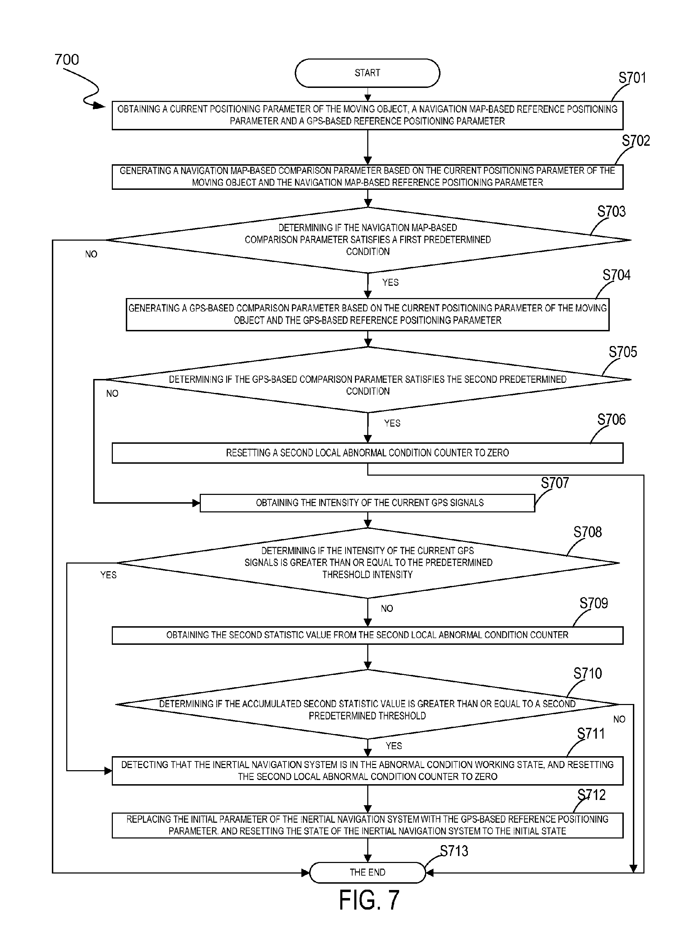

FIG.7 is a flowchart 700 illustrating a method for correcting errors for an Inertial Navigation System, in accordance with one embodiment of the present disclosure. The method disclosed in this example includes the steps of S701-S713, wherein the steps of S701-S704 perform similar functions as the steps of S201-S204 disclosed in the example above-mentioned. The step of S712 performs similar function as the step of S206 disclosed in the example above-mentioned. The detailed descriptions about steps S701-S713 will be explained below.

Step S701, a current positioning parameter of the moving object, a navigation map-based reference positioning parameter and a GPS-based reference positioning parameter are obtained.

Step S702, a navigation map-based comparison parameter is generated based on the current positioning parameter of the moving object and the navigation map-based reference positioning parameter. In one embodiment, the navigation map-based comparison parameter includes a distance difference parameter and an orientation difference parameter.

After the navigation map-based comparison parameter is generated, the Inertial Navigation System determines if the navigation map-based comparison parameter satisfies a first predetermined condition, step S703. For example, the value of the distance difference parameter in the navigation map-based comparison parameter is compared with a value of 30m, and the value of the orientation difference parameter is compared with a value 5°. If the distance difference parameter ΔD1 is less than 30m and the orientation difference parameter ΔH1 is less than 5°, then the first predetermined condition is satisfied; otherwise, the first predetermined condition is not satisfied. If the first predetermined condition is satisfied which means the working state of the Inertial Navigation System is normal, the Inertial Navigation System proceeds to generate a GPS-based comparison parameter, step S704; otherwise, no action is taken.

Step S704, a GPS-based comparison parameter is generated based on the current positioning parameter of the moving object and the GPS-based reference positioning parameter. In one embodiment, the GPS-based comparison parameter includes a distance difference parameter and an orientation difference parameter.

After generating the GPS-based comparison parameter, the Inertial Navigation System determines if the GPS-based comparison parameter satisfies a second predetermined condition. For example, the value of the distance difference parameter in the GPS-based comparison parameter is compared with a value of 30m and the value of the orientation difference parameter is compared with a value of 5°. If the distance difference parameter is less than 30m and the orientation difference parameter is less than 5°, then the second predetermined condition is satisfied; otherwise, the second predetermined condition is not satisfied. If the GPS-based comparison parameter satisfies the second predetermined condition, which means the working state of the Inertial Navigation System is normal, the Inertial Navigation System proceeds to reset a second local abnormal condition counter, step S706; otherwise, the Inertial Navigation System obtains the intensity of the current GPS signals, step S707.

Step S706, the second local abnormal condition counter is reset to zero. After resetting the second local abnormal condition counter, no action is taken. In one embodiment, the statistic value from the second local abnormal condition counter is represented by Cntb. When the second local abnormal condition counter is reset to zero, the statistic value Cntb is equal to zero.

Wherein, the second local abnormal condition counter is configured to calculate the number of occurrences that the GPS-based comparison parameter does not satisfy the second predetermined condition and the intensity of the current GPS signals is less than predetermined threshold intensity.

Step S707, the intensity of the current GPS signals is obtained. For example, the intensity of the current GPS signals can be represented by a value 5. In one embodiment, the intensity of the current GPS signals represents the intensity of signals from the GPS which provide the GPS-based reference positioning parameter.

After obtaining the intensity of the current GPS signals, the Inertial Navigation System determines if the intensity of the current GPS signals is greater than or equal to the predetermined threshold intensity. If the intensity of the current GPS signals is either greater than or equal to the predetermined threshold intensity, the Inertial Navigation System is determined to be in the abnormal working state and the second local abnormal condition counter is reset to zero, step S711; otherwise, no action is taken.

Step S711, the second local abnormal condition counter is reset to zero because the Inertial Navigation System is detected to be in the abnormal condition working state.

For example, the predetermined threshold intensity can be set as a value 10. If the value of the intensity of the current GPS signals is equal to 12, which is greater than the predetermined threshold intensity, then the Inertial Navigation System is detected to be in the abnormal condition working state and the second local abnormal condition counter is reset to zero, i.e. Cntb is equal to zero. However, if the value of the intensity of the current GPS signals is equal to a value 5, which is less than the predetermined threshold intensity, then the Inertial Navigation System proceeds to obtain a second statistic value, step S709.

Step S709, the second statistic value from the second local abnormal condition counter is obtained. And the second statistic value Cntb is accumulated to obtain an accumulated second statistic value. In one embodiment, the accumulated second statistic value Cntb is obtained according to the following equation (2):

$$Cntb=Cntb+1 \qquad (2)$$

For example, if the obtained second statistic value is 5, then the accumulated second statistic value is equal to 6.

After obtaining the accumulated second statistic value from the second local abnormal condition counter, the Inertial Navigation System determines if the accumulated second statistic value is greater than or equal to a second predetermined threshold. If the accumulated second statistic value Cntb is either greater than or equal to the second predetermined threshold, the working state of the Inertial Navigation System is determined and the second local abnormal condition counter is reset, step S711; otherwise, no action is taken.

More specifically, if the accumulated second statistic value is greater than the second predetermined threshold, then the Inertial Navigation System performs step S711, in which the Inertial Navigation System is detected to be in the abnormal condition working state, and the second local abnormal condition counter is reset to zero.

For example, if the accumulated second statistic value is equal to a value of 13 and the second predetermined threshold is 10, as the accumulated second statistic value is greater than the second predetermined threshold, it can be determined that the Inertial Navigation System is in the abnormal working state and the second local abnormal condition counter is reset to zero, e.g., Cntb is equal to zero.

After it is determined that the Inertial Navigation System is in the abnormal working state, the initial parameter in the Inertial Navigation System is replaced with the GPS-based reference positioning parameter obtained from GPS system and the state of the Inertial Navigation System is reset to the initial state, which is the state that the Inertial Navigation System uses the navigation map and the GPS information as inputs to the recursive calculation last time, step S712. After the initial parameter is replaced with the GPS-based reference positioning parameter and the Inertial Navigation System is reset to its initial state, map errors caused by the failure to update the road-net information of the navigation map or caused by the inaccurate mapping for the road-net information in the Inertial Navigation System are decreased.

In the embodiment described in FIG. 7, the second local abnormal condition counter is configured to calculate the number of occurrences that the GPS-based comparison parameter does not satisfy the second predetermined condition and the intensity of the current GPS signals is less than the predetermined threshold intensity.

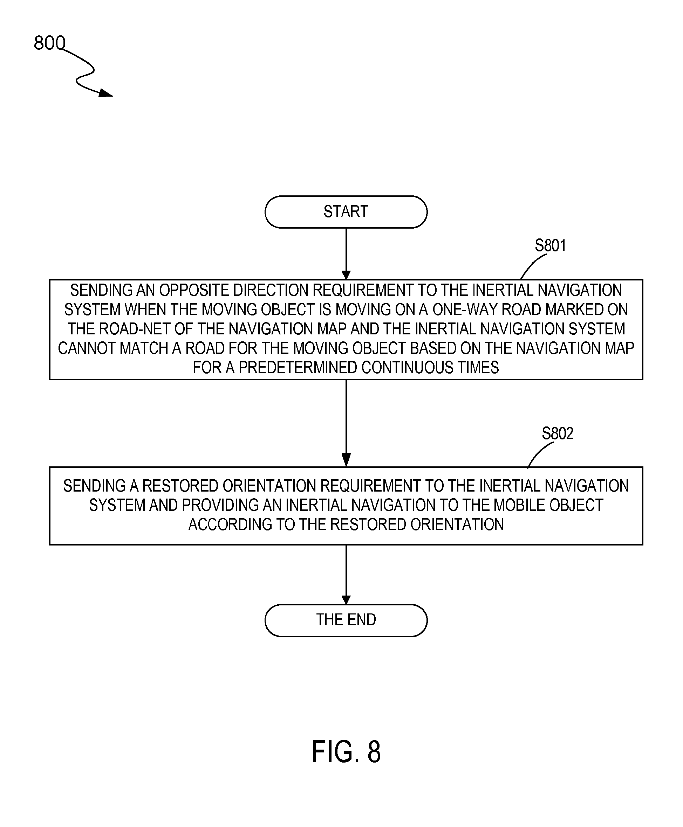

FIG. 8 is a flowchart 800 illustrating a method for correcting errors for an Inertial Navigation System, in accordance with one embodiment of the present disclosure. The embodiment shown in FIG. 8 further includes the step of correcting errors of a road-net of the navigation map based on any embodiment described above The detailed steps will be explained below.

Step S801, when the moving object is moving on a one-way road marked on the road-net of the navigation map, and if the Inertial Navigation System cannot match the one-way road for the moving object based on the navigation map for a predetermined continuous times, the moving object sends an opposite direction requirement to the Inertial Navigation System. In one embodiment, the opposite orientation requirement is used to cause the Inertial Navigation System to perform a recursive calculation for the moving object which is in an opposite orientation but at the same position.

Step S802, if the one-way road matching is done according to the opposite orientation requirement by the Inertial Navigation System, then the moving object sends a restored orientation requirement to the Inertial Navigation System. The restored orientation requirement is used to require the Inertial Navigation System to restore the navigation orientation and provide an inertial navigation to the moving object according to the restored orientation.

In the embodiment described in FIG. 8, the Inertial Navigation System can match the road when the road-net information is not updated and the road is actually bidirectional but marked as an one-way road on the map, moreover, the moving backward of the moving object can be discerned in the map. Therefore, the accuracy for detecting abnormal working state of the Inertial Navigation System is improved.

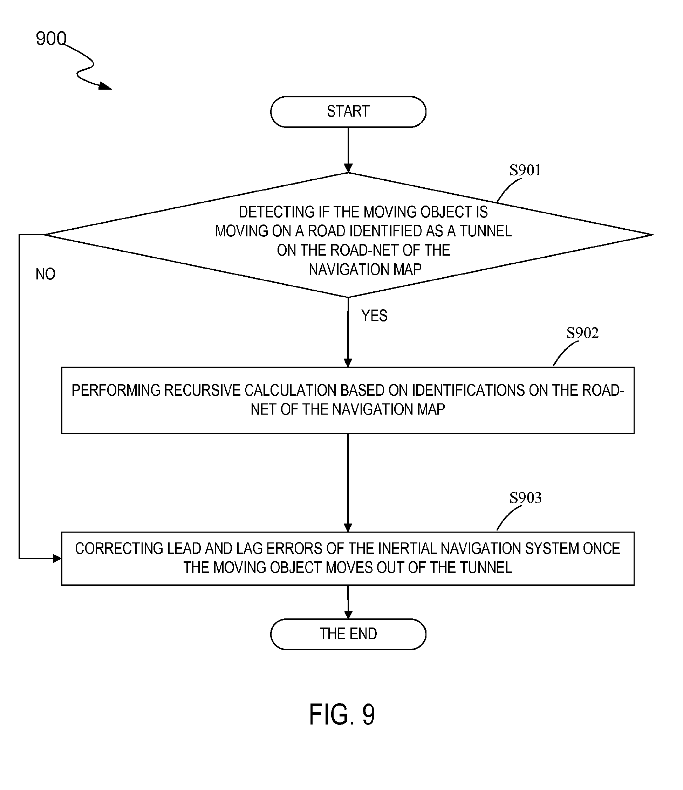

FIG. 9 is a flowchart 900 illustrating another example of a method for correcting errors for the Inertial Navigation System, in accordance with one embodiment of the present disclosure. The embodiment shown in FIG. 9 further corrects errors for a road-net of the navigation map based on any embodiment described above. The detailed steps will be explained below.

Step S901, the system detects if the moving object is moving on a road identified as a tunnel on the road-net of the navigation map. If it does, the system goes to the step S902; otherwise, the system goes to the step S903.

Step S902, if the moving object is moving along a road identified as a tunnel on the road-net of the navigation map, the Inertial Navigation System performs recursive calculation based on identifications on the road-net of the navigation map. The system corrects the lead and lag errors of the Inertial Navigation System once the moving object moves out of the tunnel, step S903.

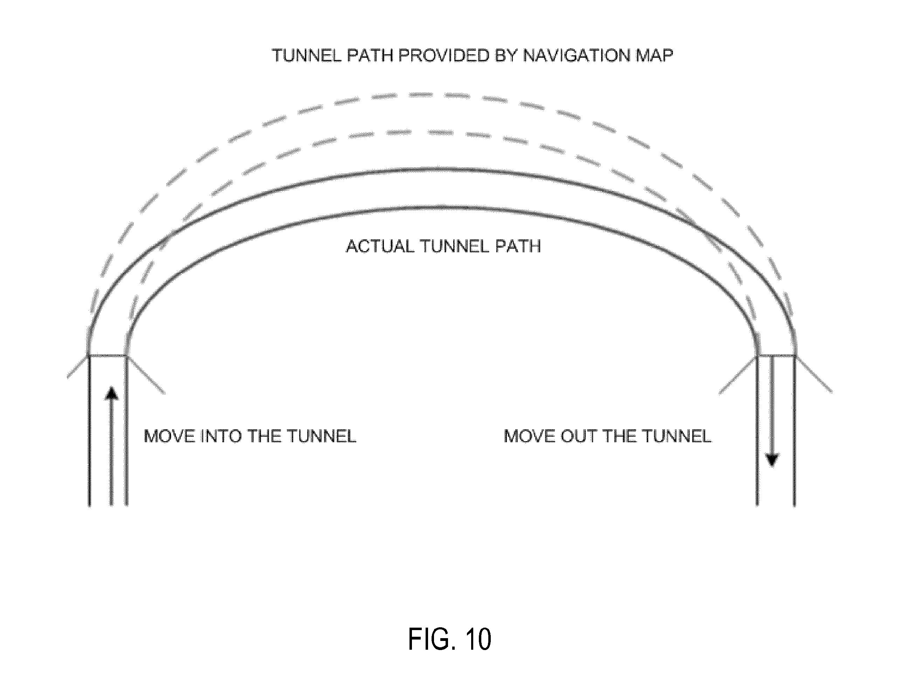

More specifically, the method disclosed in this embodiment is used to correct tunnel errors of the Inertial Navigation System. The tunnel errors represent errors created by the moving object when moving on a tunnel. In one embodiment, if the GPS signals are not received by the Inertial Navigation System for a long time, it can be determined that the moving object is moving on a tunnel. FIG. 10 is a diagram illustrating an example of a tunnel error of the Inertial Navigation System, in accordance with one embodiment of the present disclosure. In FIG. 10, the moving object is passing through a tunnel. The solid line represents the actual tunnel path, and the dotted line represents a tunnel path provided by the navigation map. If the moving object moves along the actual tunnel path, the Inertial Navigation System will fail to control and navigate the moving object.

In order to maintain the performance of the navigation system, the Inertial Navigation System does not correct the actual tunnel path, and the moving object moves along the tunnel path provided by the navigation map. As the actual tunnel path is shorter than the tunnel path from navigation map, when the moving object moves out of the tunnel and regains access to the GPS signals, the lead and lag errors will occur, which need to be corrected for the Inertial Navigation System. The method for correcting lead and lag errors can be referred to the method for correcting errors disclosed in other embodiments in present disclosure, and will not be repetitively described herein for brevity and clarity.

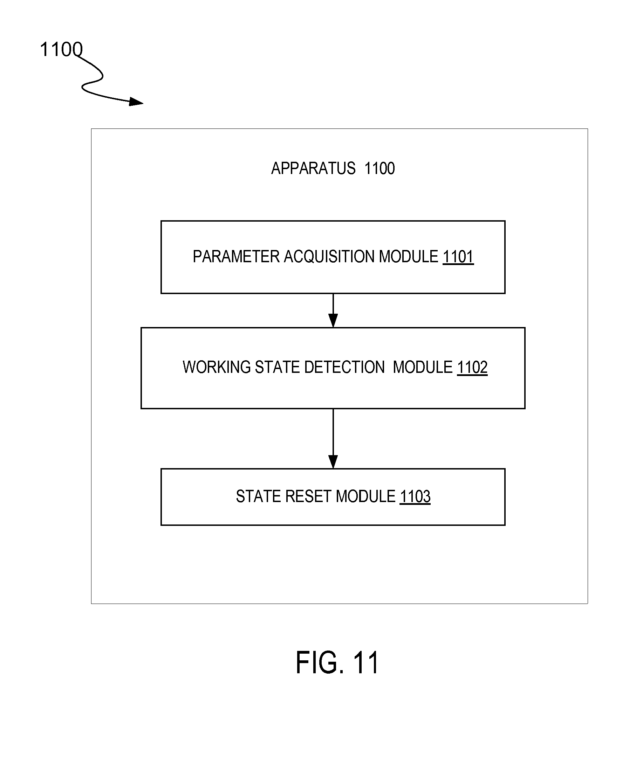

FIG. 11 illustrates an example of an apparatus 1100 with error correction for the Inertial Navigation System, in accordance with one embodiment of the present disclosure. The Inertial Navigation System corrects the positioning parameter of a moving object by recursive calculation and using a navigation map and the information from the GPS signals as inputs to the recursive calculation. The apparatus 1100 with error correction capability includes a parameter acquisition module 1101, a working state detection module 1102 and a state reset module 1103.

In one embodiment, the parameter acquisition module 1101 is configured to obtain a current positioning parameter of the moving object, a navigation map-based reference positioning parameter and a GPS-based reference positioning parameter from the Inertial Navigation System, navigation map and GPS system, respectively. The working state detection module 1102 is configured to determine the working state of the Inertial Navigation System based on the current positioning parameter of the moving object, the navigation map-based reference positioning parameter and the GPS-based reference positioning parameter received from the parameter acquisition module 1101.

The state reset module 1103 is configured to update an initial parameter of the Inertial Navigation System by the GPS-based reference positioning parameter and reset the Inertial Navigation System to an initial state when the Inertial Navigation System is in an abnormal working state determined by the working state detection module 1102.

In one embodiment, the working state of the Inertial Navigation System is detected by working state detection module 1102 based on the current positioning parameter of the moving object, the navigation map-based reference positioning parameter, the GPS-based reference positioning parameter and a predetermined condition. Moreover, if the Inertial Navigation System is in the abnormal working state, the initial parameter is replaced with the GPS-based reference positioning parameter and the state of the Inertial Navigation System is reset to the initial state by the state reset module 1103, accordingly, map errors caused by failure to update the road-net information of the navigation map or the inaccurate mapping for the road-net information is decreased, and the accuracy of the inertial navigation is greatly improved.

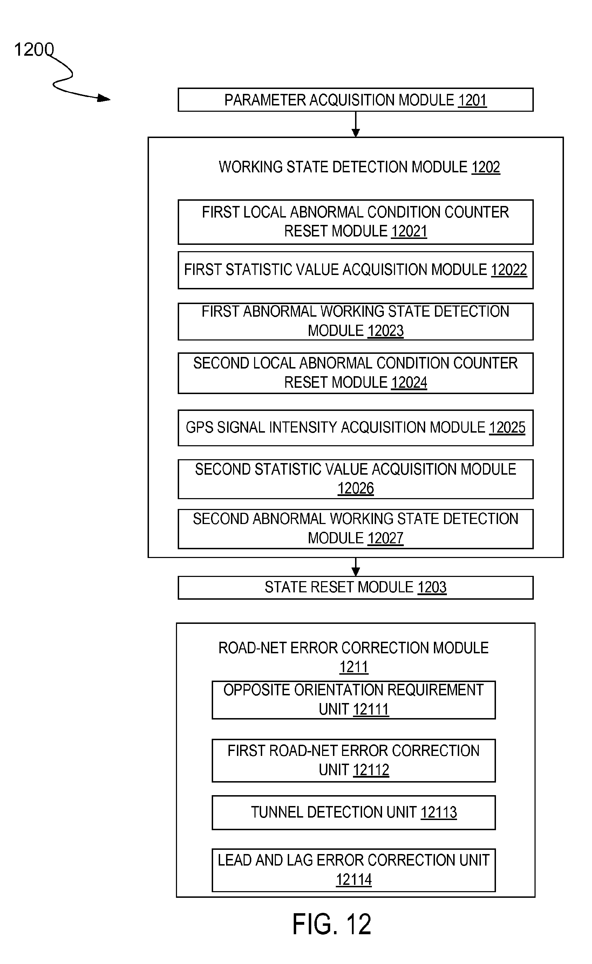

FIG. 12 illustrates an example of an apparatus 1200 with error correction capability to provide information to the Inertial Navigation System, in accordance with one embodiment of the present disclosure. The Inertial Navigation System corrects the positioning parameter of a moving object by recursive calculation and using a navigation map and the GPS information as inputs to the recursive calculation. The apparatus 1200 includes a parameter acquisition module 1201, a working state detection module 1202, a state reset module 1203 and a road-net error correction module 1211.

In one embodiment, the parameter acquisition module 1201 is configured to obtain a current positioning parameter of the moving object, a navigation map-based reference positioning parameter and a GPS-based reference positioning parameter from the Inertial Navigation System, navigation map and GPS system, respectively. The working state detection module 1202 is configured to determine the working state of the Inertial Navigation System based on the current positioning parameter of the moving object, the navigation map-based reference positioning parameter and the GPS-based reference positioning parameter received from the parameter acquisition module 1201.

Specifically, the working state detection module 1202 further includes a first local abnormal condition counter reset module 12021, that is configured to reset a first local abnormal condition counter as zero if the GPS-based comparison parameter satisfies the second predetermined condition; a first statistic value acquisition module 12022, that is configured to obtain a first statistic value from the first local abnormal condition counter and obtain a accumulated first statistic value which is obtained by adding one to the first statistic value if the GPS-based comparison parameter fails to satisfy the second predetermined condition; a first abnormal working state detection module 12023, that is configured to detect if the accumulated first statistic value is greater than or equal to a first predetermined threshold, if the accumulated first statistic value is greater than or equal to the first predetermined threshold, the first abnormal working state detection module 12023 determines that the Inertial Navigation System is in the abnormal working state and the first local abnormal condition counter is reset to zero; a second local abnormal condition counter reset module 12024, that is configured to reset the second local abnormal condition counter if the GPS-based comparison parameter satisfies the second predetermined condition; a GPS signal intensity acquisition module 12025, that is configured to obtain the intensity of the current GPS signals; a second statistic value acquisition module 12026, that is configured to obtain a second statistic value from the second local abnormal condition counter and obtain a accumulated second statistic value by adding one to the obtained second statistic value if the intensity of the current GPS signals is less than the predetermined threshold intensity; and a second abnormal working state detection module 12027, that is configured to detect if the intensity of the current GPS signals is greater than or equal to the predetermined threshold intensity.

In one embodiment, the working state detection module 1202 determines that the working state of the Inertial Navigation System based on the modules above-mentioned and described steps in FIG.6 and FIG. 7. Specifically, if the navigation map-based comparison parameter does not satisfy a first predetermined condition, then the working state detection module 1202 determines that the Inertial Navigation System is in the abnormal working state. For example, the navigation map-based comparison parameter includes a distance difference parameter and an orientation difference parameter. In one embodiment, the value of the distance difference parameter in the navigation map-based comparison parameter is compared with a value of 30m, and the value of the orientation difference parameter is compared with a value 5°. If the distance difference parameter is less than 30m and the orientation difference parameter is less than 5°, then the first predetermined condition is satisfied; otherwise, the first predetermined condition is not satisfied.

If the navigation map-based comparison parameter satisfies the first predetermined condition, the working state detection module 1202 generates a GPS-based comparison parameter based on the current positioning parameter of the moving object and the GPS-based reference positioning parameter. The GPS-based comparison parameter is compared with a second predetermined condition. For example, the GPS-based comparison parameter includes a distance difference parameter and an orientation difference parameter. In one embodiment, the value of the distance difference parameter in the navigation map-based comparison parameter is compared with a value of 30m, and the value of the orientation difference parameter is compared with a value 5°. If the distance difference parameter is less than 30m and the orientation difference parameter is less than 5°, then the second predetermined condition is satisfied; otherwise, the first predetermined condition is not satisfied. If the GPS-based comparison parameter does not satisfy a second predetermined condition, the working state detection module 1202 determines that the Inertial Navigation System is in the abnormal working state.

In one embodiment, the working state detection module 1202 determines if the Inertial Navigation System is in the abnormal working state based on the current positioning parameter of the moving object, the navigation map-based reference positioning parameter and the first predetermined condition for the first time. And the working state detection module 1202 can further determine if the Inertial Navigation System is in the abnormal working state for the second time based on the current positioning parameter of the moving object, the GPS-based reference positioning parameter and the second predetermined condition.

The GPS signal intensity acquisition module 12025 obtains the intensity of the current GPS signals. If the intensity of the current GPS signals is greater than or equal to the predetermined threshold intensity, the second abnormal working state detection module 12027 determines that the Inertial Navigation System is in the abnormal working state and the second local abnormal condition counter is reset to zero.

If the intensity of the current GPS signals is less than the predetermined threshold intensity, the second statistic value acquisition module 12026 obtains a second statistic value from the second local abnormal condition counter, and obtains an accumulated second statistic value by adding one to the second statistic value. And then the second abnormal working state detection module 12027 determines if the accumulated second statistic value is greater than or equal to a second predetermined threshold. If it does, the second abnormal working state detection module 12027 determines that the Inertial Navigation System is in the abnormal working state and the second local abnormal condition counter is reset to zero.

If the Inertial Navigation System is in the abnormal working state determined by the working state detection module 1202, the state reset module 1203 replaces the initial parameter of the Inertial Navigation System with the GPS-based reference positioning parameter and resets the Inertial Navigation System to the initial state, accordingly, map errors caused by failure to update the road-net information of the navigation map or the inaccurate mapping for the road-net information is decreased, and the accuracy of the inertial navigation is greatly improved.

In one embodiment, the number of occurrences the Inertial Navigation System in the abnormal working state is calculated by calculating the times that the GPS-based comparison parameter does not satisfy the second predetermined condition. If the number of occurrences that the GPS-based comparison parameter does not satisfy the second predetermined condition for multiple time, the Inertial Navigation System is determined to be in the abnormal working state.

In one embodiment, each of the current positioning parameter of the moving object, the navigation map-based reference positioning parameter and the GPS-based reference positioning parameter includes a location positioning parameter and/or an orientation positioning parameter.

In one embodiment, the second local abnormal condition counter is configured to calculate the number of occurrences that the GPS-based comparison parameter does not satisfy the second predetermined condition and the intensity of current GPS signals is less than predetermined threshold intensity.

In one embodiment, the apparatus 1200 further includes a road-net error correction module 1211 which is configured to correct errors of a road-net of the navigation map.

In one embodiment, the road-net error correction module 1211 includes an opposite orientation requirement unit 12111 and a first road-net error correction unit 12112.

In one embodiment, the opposite orientation requirement unit 12111 is configured to send an opposite orientation requirement to the Inertial Navigation System if the Inertial Navigation System cannot match a road based on the navigation map for a predetermined continuous times when the moving object is moving on a one-way road marked on the road-net of the navigation map.

The first road-net error correction unit 12112 is configured to send a restored orientation requirement to the Inertial Navigation System if the one-way road matching is realized according to the opposite orientation requirement by the Inertial Navigation System. In one embodiment, the restored orientation requirement is used to cause the Inertial Navigation System to restore the navigation orientation and provide an inertial navigation to the mobile object according to the restored orientation.

In this embodiment, the Inertial Navigation System can perform road matching when the road-net information is not updated timely, the road is actually bidirectional but marked as an one-way road on the map, and the moving backward of the moving object can be discerned in the map. , Therefore, the accuracy for detecting abnormal working state of the Inertial Navigation System is improved, accordingly, map errors caused by the failure to update the road-net information of the navigation map or caused by the inaccurate mapping for the road-net information in the Inertial Navigation System are decreased, and the accuracy of the inertial navigation is greatly improved.

In one example, the road-net error correction module 1210 further includes a tunnel detection unit 12113 and a lead and lag error correction unit 12114.

The tunnel detection unit 12113 is configured to detect if the moving object is moving on a road identified as a tunnel on the road-net of the navigation map. If moving object is moving on a road identified as a tunnel, the Inertial Navigation System performs recursive calculation based on identifications on the road-net of the navigation map.

The lead and lag error correction unit 12114 is configured to correct lead and lag errors for the Inertial Navigation System when the moving object moves out of the tunnel.

The method disclosed in this embodiment is used to correct tunnel errors of the Inertial Navigation System. FIG.10 is a diagram illustrating an example of a tunnel error of the Inertial Navigation System, in accordance with one embodiment of the present disclosure. In FIG. 10, the moving object is meeting a tunnel. The solid line represents an actual tunnel path, and the dotted line represents a tunnel path from navigation map. If the moving object moves along the actual tunnel path, the Inertial Navigation System will fail to navigate.

In order to maintain the performance of the navigation, the Inertial Navigation System does not correct the actual tunnel path, and the moving object is moving on the tunnel path provided by the navigation map. Since the actual tunnel path is shorter than the tunnel path provided by the navigation map, when the moving object moves out of the tunnel and obtains GPS signals, the lead and lag errors will occur, which needs to be corrected for the Inertial Navigation System. The method for correcting the lead and lag errors can be referred to the method for correcting errors in other embodiments in present disclosure and will not be repetitively described herein for brevity and clarity.

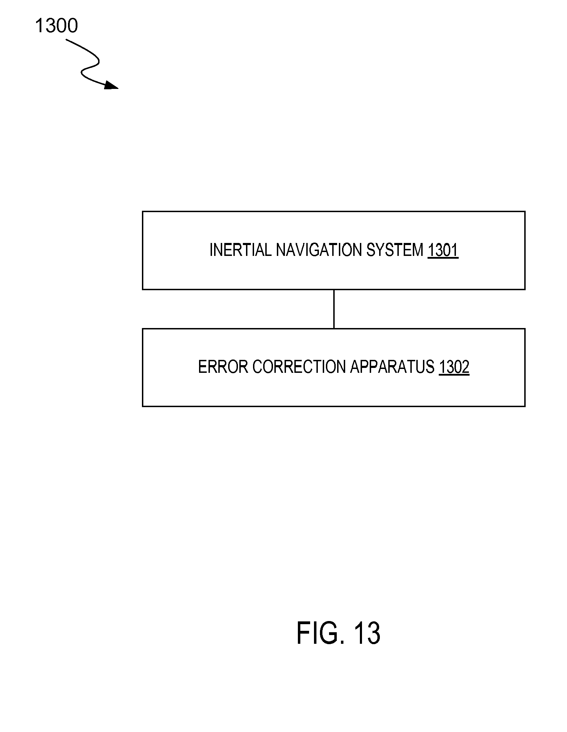

As shown in FIG.13, an example of a system 1300 with error correction used for the Inertial Navigation System is disclosed, in accordance with one embodiment of the present disclosure. The system 1300 includes an Inertial Navigation System 1301 and an error correction apparatus 1302. In one embodiment, the Inertial Navigation System 1301 corrects the positioning parameter of a moving object by recursive calculation and using a navigation map and the GPS information as inputs to the recursive calculation.

The error correction apparatus 1302 is configured to determine a working state of the Inertial Navigation System based on an obtained current positioning parameter of the moving object, a navigation map-based reference positioning parameter and a GPS-based reference positioning parameter. The current positioning parameter of the moving object is obtained from the Inertial Navigation System, the navigation map-based reference positioning parameter is obtained from a navigation map and GPS-based reference positioning parameter is obtained from GPS system. If the Inertial Navigation System 1301 is in an abnormal working state, the error correction apparatus 1302 replaces an initial parameter of the Inertial Navigation System 1301 with the GPS-based reference positioning parameter, and resets the Inertial Navigation System 1301 to an initial state.

More specifically, the error correction apparatus 1302 is configured to generate a navigation map-based comparison parameter based on the current positioning parameter of the moving object and the navigation map-based reference positioning parameter. If the navigation map-based comparison parameter does not satisfy a first predetermined condition, the error correction apparatus 1302 determines that the Inertial Navigation System 1301 is in the abnormal working state. If the navigation map-based comparison parameter satisfies the first predetermined condition, the error correction apparatus 1302 generates a GPS comparison-based parameter based on the current positioning parameter of the moving object and the GPS-based reference positioning parameter from the GPS system. If the GPS-based comparison parameter does not satisfy a second predetermined condition, the error correction apparatus 1302 determines that the Inertial Navigation System 1301 is in the abnormal working state. The details as how to determine if the navigation map-based comparison parameter satisfies the first predetermined condition and the GPS-based comparison parameter satisfies the second predetermined condition is described above, and will not be repetitively described herein for purposes of brevity and clarity.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A method for correcting errors in an Inertial Navigation System, the Inertial Navigation System corrects a positioning parameter of a moving object by recursive calculation and using a navigation map and the GPS information as inputs to the recursive calculation, comprising:

determining a working state of the Inertial Navigation System based on a current positioning parameter of the moving object, a navigation map-based reference positioning parameter and a GPS-based reference positioning parameter by a working state detection module;
replacing an initial parameter of the Inertial Navigation System with the GPS-based reference positioning parameter and resetting the Inertial Navigation System to an initial state for correcting errors caused by the failure to update the road-net information of the navigation map or caused by the inaccurate mapping for the road-net information in the Inertial Navigation System if the Inertial Navigation System is determined to be in an abnormal working state.

2. The method of claim 1, wherein the step of determining the working state of the Inertial Navigation System comprising:

generating a navigation map-based comparison parameter based on the current positioning parameter of the moving object and the navigation map-based reference positioning parameter;
determining that the Inertial Navigation System is in the abnormal working state if the navigation map-based comparison parameter does not satisfy a first predetermined condition;
generating a GPS-based comparison parameter based on the current positioning parameter of the moving object and the GPS-based reference positioning parameter if the navigation map-based comparison parameter satisfies the first predetermined condition; and
determining that the Inertial Navigation System is in the abnormal working state if the GPS-based comparison parameter does not satisfy a second predetermined condition.

3. The method of claim 2, when the GPS-based comparison parameter does not satisfy the second predetermined condition, further comprising the steps of:

obtaining a first statistic value from the first local abnormal condition counter;
obtaining an accumulated first statistic value by adding one to the first statistic value; and
detecting if the accumulated first statistic value is greater than or equal to a first predetermined threshold,
wherein if the accumulated first statistic value is greater than or equal to a first predetermined threshold, the Inertial Navigation System is determined to be in the abnormal working state and the first local abnormal condition counter is reset to zero.

4. The method of claim 2 or 3, when the GPS-based comparison parameter fails to satisfy the second predetermined condition, further comprising the steps of:

obtaining an intensity of the current GPS signals; and
comparing the intensity of the current GPS signals with a predetermined threshold intensity, wherein if the intensity of the current GPS signals is greater than or equal to the predetermined threshold intensity, the Inertial Navigation System is determined to be in the abnormal working state and the second local abnormal condition counter is reset to zero.

5. The method of claim 3 or 4, when the GPS-based comparison parameter fails to satisfy the second predetermined condition, further comprising:

obtaining a second statistic value from the second local abnormal condition counter and obtaining a accumulated second statistic value by adding one to the second statistic value if the intensity of the current GPS signals is less than the predetermined threshold intensity; and
detecting if the accumulated second statistic value is greater than or equal to a second predetermined threshold,
wherein if the accumulated second statistic value is greater than or equal to a second predetermined threshold, the Inertial Navigation System is determined to be in the abnormal working state and the second local abnormal condition counter is reset to zero.

6. The method of one of claims 1 to 5, wherein each of the current positioning parameter of the moving object, the navigation map-based reference positioning parameter and the GPS-based reference positioning parameter comprises at least one of location positioning parameter and orientation positioning parameter.

7. The method of one of claims 1 to 6, further comprising:

correcting errors for a road-net of the navigation map.

8. The method of claim 7, wherein the step of correcting errors for the road-net of the navigation map comprising the steps of:

sending an opposite orientation requirement to the Inertial Navigation System if the Inertial Navigation System cannot match a road based on the navigation map for a predetermined continuous times when the moving object is moving on a one-way road marked on the road-net of the navigation map; and

sending a restored orientation requirement to the Inertial Navigation System if the one-way road matching is realized according to the opposite orientation requirement by the Inertial Navigation System,

wherein the restored orientation requirement is used to require the Inertial Navigation System to restore the navigation orientation and provide inertial navigation to mobile object according to the restored orientation.

9. The method of claim 7 or 8, wherein the step of correcting errors for the road-net of the navigation map, further comprising the steps of:

performing recursive calculation based on identifications on the road-net of the navigation map when the moving object is moving on a road identified as a tunnel on the road-net of the navigation map; and

correcting lead and lag errors of the Inertial Navigation System once the moving object moves out of the tunnel.

10. An apparatus with error correction capability for an Inertial Navigation System, the Inertial Navigation System corrects a positioning parameter of a moving object by recursive calculation and using a navigation map and the GPS information as inputs to the recursive calculation, comprising:

a working state detection module configured to determine the working state of the Inertial Navigation System based on an current positioning parameter of the moving object, a navigation map-based reference positioning parameter and a GPS-based reference positioning parameter; and

a state reset module configured to replace an initial parameter of the Inertial Navigation System with the GPS-based reference positioning parameter and reset the Inertial Navigation System to an initial state for correcting errors caused by the failure to update the road-net information of the navigation map or caused by the inaccurate mapping for the road-net information in the Inertial Navigation System if the Inertial Navigation System is in an abnormal working state.

11. The apparatus of claim 10, wherein the working state detection module generates a navigation map-based comparison parameter according to the current positioning parameter of the moving object and the navigation map-based reference positioning parameter, and determines that the Inertial Navigation System is in the abnormal working state if the navigation map-based comparison parameter does not satisfy a first predetermined condition.

12. The apparatus of claim 10 or 11, wherein the working state detection module further generates a GPS-based comparison parameter according to the current positioning parameter of the moving object and the GPS-based reference positional parameter if the navigation map-based comparison parameter satisfies the first predetermined condition,

wherein the Inertial Navigation System is determined to be in the abnormal working state if the GPS-based comparison parameter does not satisfy a second predetermined condition.

13. The apparatus of one of claims 10 to 12, further comprising:

a first local abnormal condition module configured to reset a first local abnormal condition counter;

a first statistic value acquisition module configured to obtain a first statistic value from the first local abnormal condition counter, and obtain a accumulated first statistic value by adding one to the first statistic value; and

a first abnormal working state detection module configured to detect if the accumulated first statistic value is greater than or equal to a first predetermined threshold,

wherein the Inertial Navigation System is determined to be in the abnormal working state and the first local abnormal condition counter is reset to zero if the accumulated first statistic value is greater than or equal to the first predetermined threshold.

14. The apparatus of one of claims 10 to 13, further comprising:

a second local abnormal condition counter reset module configured to reset a second local abnormal condition counter;

a GPS signal intensity acquisition module configured to obtain intensity of the current GPS signals; and

a second abnormal working state detection module configured to detect if the intensity of the current GPS signals is greater than or equal to the predetermined threshold intensity,

wherein if the intensity of the current GPS signals is greater than or equal to the predetermined threshold intensity, the Inertial Navigation System is determined to be in the abnormal working state and the second local abnormal condition counter is reset to zero;

wherein if the intensity of the current GPS signals is less than the predetermined intensity threshold of the signals, obtain a second statistic value from the second local exception counter, and obtain a accumulative second statistic value by adding one to the second statistic value; if the accumulative second statistic value is greater than or equal to a second predetermined count threshold, then determine that the Inertial Navigation System is in the abnormal working state and clear the second local abnormal condition counter.

15. The apparatus of claim 13 or 14, further comprising:

a second statistic value acquisition module configured to obtain a second statistic value from the second local abnormal condition counter and obtain a accumulated second statistic value by adding one to the second statistic value if the intensity of the current GPS signals is less than the predetermined threshold intensity, wherein if the accumulative second statistic value is greater than or equal to a second predetermined threshold, the Inertial Navigation System is determined to be in the abnormal working state and the second local abnormal condition counter is reset to zero.

16. The apparatus of one of claims 10 to 15, wherein each of the current positioning parameter of the moving object, the navigation map-based reference positioning parameter and the GPS-based reference positioning parameter comprises a location positioning parameter and/or an orientation positioning parameter.

17. The apparatus of one of claims 10 to 16, further comprising:

a road-net error correction module configured to correct errors for a road-net of the navigation map.

18. The apparatus of claim 17, wherein the road-net error correction module further comprising:

an opposite orientation requirement unit configured to send an opposite orientation requirement to the Inertial Navigation System if the Inertial Navigation System cannot match a road based on the navigation map for a predetermined continuous times when the moving object is moving on a one-way road marked on the road-net of the navigation map; a first road-net error correction unit configured to send a restored orientation requirement to the Inertial Navigation System if the one-way road matching is realized according to the opposite orientation requirement by the inertial navigation system, wherein the restored orientation requirement is used to require the Inertial Navigation System to restore navigation orientation and provide an inertial navigation to mobile object according to the restored orientation.

19. The apparatus of claim 17 or 18, wherein the road-net error correction module further comprising:

a tunnel detection unit configured to detect if the moving object is moving on a road identified as a tunnel on the road-net of the navigation map; and a lead and lag error correction unit configured to correct lead and lag errors for the Inertial Navigation System when the moving object moves out of the tunnel, wherein the tunnel detection unit performs recursive calculation based on identifications on the road-net by the Inertial Navigation System if the moving object is moving on a road identified as a tunnel on the road-net of the navigation map.

20. An system for correcting errors caused by a failure to update road-net information of a navigation map or caused by inaccurate mapping for the road-net information, comprising:

an apparatus according to one of claims 10 to 19; and said Inertial Navigation System configured to correct a positioning parameter of a moving object by recursive calculation and using the navigation map and the GPS information as inputs to the recursive calculation.

21. The system of claim 20, wherein the apparatus with error correction generates a navigation map-based comparison parameter according to the current positioning parameter of the moving object and the navigation map-based reference positioning parameter, and determines that the Inertial Navigation System is in the abnormal working state if the navigation map-based comparison parameter does not satisfy a first predetermined condition

22. The system of claim 20 or 21, wherein the apparatus with error correction generates a GPS-based comparison parameter according to the current positioning parameter of the moving object and the GPS-based reference positioning parameter if the navigation map-based comparison parameter satisfies the first predetermined condition, and further determines that the Inertial Navigation System is in the abnormal working state if the GPS-based comparison parameter does not satisfy a second predetermined condition.

100

START

DETERMINING CURRENT POSITIONING PARAMETER BY THE INERTIAL NAVIGATION SYSTEM — S101

OBTAINING NAVIGATION MAP-BASED REFERENCE POSITIONING PARAMETER FROM THE NAVIGATION MAP — S102

OBTAINING GPS-BASED REFERENCE POSITIONING PARAMETER FROM A GPS SYSTEM — S103

IS THE WORKING STATE OF THE INITIAL NAVIGATION SYSTEM ABNORMAL? — S104

NO

YES

REPLACING INITIAL PARAMETER WITH THE GPS-BASED REFERENCE POSITIONING PARAMETER — S105

RESETTING THE INERTIAL NAVIGATION SYSTEM TO ITS INITIAL STATE — S106

START

FIG. 1

200

START

OBTAINING A CURRENT POSITIONING PARAMETER OF THE MOVING OBJECT, A NAVIGATION
MAP-BASED REFERENCE POSITIONING PARAMETER AND A GPS-BASED REFERENCE
POSITIONING PARAMETER

S201

GENERATING A NAVIGATION MAP-BASED COMPARISON PARAMETER BASED ON THE CURRENT
POSITIONING PARAMETER OF THE MOVING OBJECT AND THE NAVIGATION MAP-BASED
REFERENCE POSITIONING PARAMETER

S202

DETERMINING IF THE NAVIGATION MAP-BASED
COMPARISON PARAMETER SATISFIES A FIRST
PREDETERMINED
CONDITION

S203

NO

YES

GENERATING A GPS-BASED COMPARISON PARAMETER BASED ON THE CURRENT
POSITIONING PARAMETER OF THE MOVING OBJECT AND THE GPS-BASED REFERENCE
POSITIONING PARAMETER

S204

DETERMINING IF THE GPS-BASED COMPARISON
PARAMETER SATISFIES A SECOND
PREDETERMINED
CONDITION

S205

NO

YES

REPLACING THE INITIAL PARAMETER OF THE INERTIAL NAVIGATION SYSTEM WITH THE GPS-
BASED REFERENCE POSITIONING PARAMETER, AND RESETTING THE STATE OF THE INERTIAL
NAVIGATION SYSTEM TO THE INITIAL STATE

S206

THE END

S207

FIG. 2

FIG. 3

FIG. 4

FIG. 5

600

START

S601
OBTAINING A CURRENT POSITIONING PARAMETER OF THE MOVING OBJECT, A NAVIGATION MAP-BASED REFERENCE POSITIONING PARAMETER AND A GPS-BASED REFERENCE POSITIONING PARAMETER

S602
GENERATING A NAVIGATION MAP-BASED COMPARISON PARAMETER BASED ON THE CURRENT POSITIONING PARAMETER OF THE MOVING OBJECT AND THE NAVIGATION MAP-BASED REFERENCE POSITIONING PARAMETER

S603
DETERMINING IF THE NAVIGATION MAP-BASED COMPARISON PARAMETER SATISFIES A FIRST PREDETERMINED CONDITION

NO

YES

S604
GENERATING A GPS-BASED COMPARISON PARAMETER BASED ON THE CURRENT POSITIONING PARAMETER OF THE MOVING OBJECT AND THE GPS-BASED REFERENCE POSITIONING PARAMETER

S605
DETERMINING IF THE GPS-BASED COMPARISON PARAMETER SATISFIES THE SECOND PREDETERMINED CONDITION

NO

YES

S606
RESETTING A FIRST LOCAL ABNORMAL CONDITION COUNTER TO ZERO

S607
OBTAINING A FIRST STATISTIC VALUE Cnta FROM THE FIRST LOCAL ABNORMAL CONDITION COUNTER, AND OBTAINING AN ACCUMULATED FIRST STATISTIC VALUE BY ACCUMULATING THE FIRST STATISTIC VALUE Cnta

S608
DETERMINING IF THE ACCUMULATED FIRST STATISTIC VALUE Cnta IS GREATER THAN OR EQUAL TO A FIRST PREDETERMINED THRESHOLD

NO

YES

S609
DETECTING THAT THE INERTIAL NAVIGATION SYSTEM IS IN THE ABNORMAL CONDITION WORKING STATE, AND RESETTING THE FIRST LOCAL ABNORMAL CONDITION COUNTER TO ZERO

S610
REPLACING THE INITIAL PARAMETER OF THE INERTIAL NAVIGATION SYSTEM WITH THE GPS-BASED REFERENCE POSITIONING PARAMETER, AND RESETTING THE STATE OF THE INERTIAL NAVIGATION SYSTEM TO THE INITIAL STATE

S611
THE END

FIG. 6

700

START

S701

OBTAINING A CURRENT POSITIONING PARAMETER OF THE MOVING OBJECT, A NAVIGATION MAP-BASED REFERENCE POSITIONING PARAMETER AND A GPS-BASED REFERENCE POSITIONING PARAMETER

S702

GENERATING A NAVIGATION MAP-BASED COMPARISON PARAMETER BASED ON THE CURRENT POSITIONING PARAMETER OF THE MOVING OBJECT AND THE NAVIGATION MAP-BASED REFERENCE POSITIONING PARAMETER

S703

DETERMINING IF THE NAVIGATION MAP-BASED COMPARISON PARAMETER SATISFIES A FIRST PREDETERMINED CONDITION

NO

YES

S704

GENERATING A GPS-BASED COMPARISON PARAMETER BASED ON THE CURRENT POSITIONING PARAMETER OF THE MOVING OBJECT AND THE GPS-BASED REFERENCE POSITIONING PARAMETER

S705

DETERMINING IF THE GPS-BASED COMPARISON PARAMETER SATISFIES THE SECOND PREDETERMINED CONDITION

NO

YES

S706

RESETTING A SECOND LOCAL ABNORMAL CONDITION COUNTER TO ZERO

S707

OBTAINING THE INTENSITY OF THE CURRENT GPS SIGNALS

S708

DETERMINING IF THE INTENSITY OF THE CURRENT GPS SIGNALS IS GREATER THAN OR EQUAL TO THE PREDETERMINED THRESHOLD INTENSITY

YES

NO

S709

OBTAINING THE SECOND STATISTIC VALUE FROM THE SECOND LOCAL ABNORMAL CONDITION COUNTER

S710

DETERMINING IF THE ACCUMULATED SECOND STATISTIC VALUE IS GREATER THAN OR EQUAL TO A SECOND PREDETERMINED THRESHOLD

NO

YES

S711

DETECTING THAT THE INERTIAL NAVIGATION SYSTEM IS IN THE ABNORMAL CONDITION WORKING STATE, AND RESETTING THE SECOND LOCAL ABNORMAL CONDITION COUNTER TO ZERO

S712

REPLACING THE INITIAL PARAMETER OF THE INERTIAL NAVIGATION SYSTEM WITH THE GPS-BASED REFERENCE POSITIONING PARAMETER, AND RESETTING THE STATE OF THE INERTIAL NAVIGATION SYSTEM TO THE INITIAL STATE

S713

THE END

FIG. 7

800

```
                    ┌─────────────────┐
                    │      START      │
                    └────────┬────────┘
                             │                        S801
                             ▼
┌────────────────────────────────────────────────────────────┐
│ SENDING AN OPPOSITE DIRECTION REQUIREMENT TO THE INERTIAL    │
│ NAVIGATION SYSTEM WHEN THE MOVING OBJECT IS MOVING ON A      │
│ ONE-WAY ROAD MARKED ON THE ROAD-NET OF THE NAVIGATION MAP    │
│ AND THE INERTIAL NAVIGATION SYSTEM CANNOT MATCH A ROAD FOR   │
│ THE MOVING OBJECT BASED ON THE NAVIGATION MAP FOR A          │
│ PREDETERMINED CONTINUOUS TIMES                               │
└────────────────────────────────┬───────────────────────────┘
                                  │                    S802
                                  ▼
┌────────────────────────────────────────────────────────────┐
│ SENDING A RESTORED ORIENTATION REQUIREMENT TO THE INERTIAL   │
│ NAVIGATION SYSTEM AND PROVIDING AN INERTIAL NAVIGATION TO    │
│ THE MOBILE OBJECT ACCORDING TO THE RESTORED ORIENTATION      │
└────────────────────────────────┬───────────────────────────┘
                                  │
                                  ▼
                    ┌─────────────────┐
                    │     THE END     │
                    └─────────────────┘
```

FIG. 8

900

```
          ┌─────────────┐
          │    START    │
          └──────┬──────┘
                 │
                 ▼
    ╱────────────────────────────╲         S901
NO ╱ DETECTING IF THE MOVING OBJECT IS ╲
◄─╱  MOVING ON A ROAD IDENTIFIED AS A TUNNEL ╲
   ╲      ON THE ROAD-NET OF THE      ╱
    ╲        NAVIGATION MAP          ╱
     ╲──────────────┬──────────────╱
                    │ YES
                    ▼                        S902
  ┌──────────────────────────────────────────────────┐
  │ PERFORMING RECURSIVE CALCULATION BASED ON          │
  │ IDENTIFICATIONS ON THE ROAD-NET OF THE NAVIGATION MAP │
  └──────────────────────┬───────────────────────────┘
                         │                    S903
                         ▼
  ┌──────────────────────────────────────────────────┐
  │ CORRECTING LEAD AND LAG ERRORS OF THE INERTIAL     │
  │ NAVIGATION SYSTEM ONCE THE MOVING OBJECT MOVES OUT  │
  │ OF THE TUNNEL                                       │
  └──────────────────────┬───────────────────────────┘
                         ▼
                  ┌─────────────┐
                  │   THE END   │
                  └─────────────┘
```

FIG. 9

TUNNEL PATH PROVIDED BY NAVIGATION MAP

ACTUAL TUNNEL PATH

MOVE INTO THE TUNNEL

MOVE OUT THE TUNNEL

FIG. 10

EP 2 574 880 A2

1100

APPARATUS 1100

PARAMETER ACQUISITION MODULE 1101

WORKING STATE DETECTION MODULE 1102

STATE RESET MODULE 1103

FIG. 11

1200

PARAMETER ACQUISITION MODULE 1201

WORKING STATE DETECTION MODULE 1202

FIRST LOCAL ABNORMAL CONDITION COUNTER
RESET MODULE 12021

FIRST STATISTIC VALUE ACQUISITION MODULE 12022

FIRST ABNORMAL WORKING STATE DETECTION
MODULE 12023

SECOND LOCAL ABNORMAL CONDITION COUNTER
RESET MODULE 12024

GPS SIGNAL INTENSITY ACQUISITION MODULE 12025

SECOND STATISTIC VALUE ACQUISITION MODULE
12026

SECOND ABNORMAL WORKING STATE DETECTION
MODULE 12027

STATE RESET MODULE 1203

ROAD-NET ERROR CORRECTION MODULE
1211

OPPOSITE ORIENTATION REQUIREMENT
UNIT 12111

FIRST ROAD-NET ERROR CORRECTION
UNIT 12112

TUNNEL DETECTION UNIT 12113

LEAD AND LAG ERROR CORRECTION UNIT
12114

FIG. 12

1300

INERTIAL NAVIGATION SYSTEM <u>1301</u>

ERROR CORRECTION APPARATUS <u>1302</u>

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201110291594 A